Europäisches Patentamt

European Patent Office

Office européen des brevets

(19)

(11) Numéro de publication: **0 148 060**
**B1**

(12) **FASCICULE DE BREVET EUROPEEN**

(45) Date de publication du fascicule du brevet:
**15.07.87**

(21) Numéro de dépôt: **84402513.0**

(22) Date de dépôt: **06.12.84**

(51) Int. Cl.⁴: **B 60 G 7/04,** B 60 G 17/04

(54) **Suspension à garde au sol variable et butées suiveuses.**

(30) Priorité: **28.12.83 FR 8321154**

(43) Date de publication de la demande:
**10.07.85 Bulletin 85/28**

(45) Mention de la délivrance du brevet:
**15.07.87 Bulletin 87/29**

(84) Etats contractants désignés:
**DE GB IT**

(56) Documents cités:
**DE - A - 2 545 082**
**FR - A - 1 061 454**
**FR - A - 2 187 565**
**FR - A - 2 216 133**
**FR - A - 2 372 708**
**FR - A - 2 471 873**
**US - A - 2 592 391**

**PATENTS ABSTRACTS OF JAPAN, vol. 7, no. 271,**
**(M-260) [1460], 3 décembre 1983**
**PATENTS ABSTRACTS OF JAPAN, vol. 7, no. 183**
**(M-235)[1328], 12 août 1983; & JP - A - 58 85 704**
**(KAYABA KOGYO K.K.) 23-05-1983**

(73) Titulaire: **AUTOMOBILES CITROEN, 62 Boulevard**
**Victor-Hugo, F-92200 Neuilly-sur-Seine (FR)**
Titulaire: **AUTOMOBILES PEUGEOT, 75, avenue de la**
**Grande Armée, F-75116 Paris (FR)**

(72) Inventeur: **Lachaize, Henri Gabriel, 13, avenue Paul**
**Langevin, F-92230 Fontenay-Aux-Roses (FR)**

(74) Mandataire: **Boivin, Claude, 9, rue Edouard-Charton,**
**F-78000 Versailles (FR)**

ACTORUM AG

## Description

La présente invention concerne les suspensions comprenant une entretoise d'épaisseur variable disposée en série avec des moyens élastiques, entre la structure d'un véhicule et l'essieu ou le bras de roue de ce véhicule, et des butées de débattement ou de contre-débattement, par exemple en élastomère, limitant la course de l'ensemble formé par l'entretoise et les moyens élastiques. Des suspensions de ce genre sont connues.

Il y a intérêt à faire varier la garde au sol du véhicule, par exemple en fonction du terrain ou de la vitesse de ce véhicule. C'est ainsi que cette garde au sol doit être relativement grande en ville alors qu'elle doit être faible sur une autoroute, lorsque le véhicule a une vitesse élevée, pour améliorer le Cx.

Jusqu'à présent, pour faire varier cette garde au sol, on modifiait l'épaisseur de l'entretoise. Mais, ce faisant, on modifie également les moments où les butées de débattement et de contre-débattement entrent en action, donc les caractéristiques de la suspension. Une suspension usuelle est plus dure, donc moins confortable, lorsque la garde au sol est grande car la butée de contre-débattement intervient alors plus tôt.

La présente invention a pour objet une suspension à garde au sol variable, dont les caractéristiques sont constantes, quelle que soit la valeur de la garde au sol.

La suspension selon l'invention est caractérisée en ce qu'elle comporte une deuxième entretoise d'épaisseur variable qui est disposée en série avec la première entretoise et sur laquelle agissent les moyens pour faire varier la garde au sol, et en ce que les butées de débattement et de contre-débattement sont portées par l'ensemble formé par la première entretoise et les moyens élastiques.

Lorsqu'on modifie l'épaisseur de la deuxième entretoise pour faire varier la garde au sol, les butées restent immobiles avec ledit ensemble ou suivent les mouvements de ce dernier, suivant que la deuxième entretoise est interposée entre la première entretoise et la structure du véhicule ou bien entre cette première entretoise et l'essieu ou le bras de roue. Les caractéristiques de la suspension restent donc constantes.

Les entretoises à volume variable peuvent être constituées par des vérins.

Dans ce cas, la suspension comprend un premier vérin associé à des moyens élastiques et des butées de débattement et de contre-débattement, et est caractérisée en ce qu'elle comprend, en outre, un deuxième vérin qui est monté mobile par rapport au premier et des moyens hydrauliques pour déplacer les deux vérins l'un par rapport à l'autre, l'un des vérins étant lié à la structure du véhicule et l'autre à l'essieu ou au bras de roue de ce véhicule.

Le cylindre du premier vérin peut être monté coulissant dans le cylindre du second vérin en jouant le rôle de piston pour ce second vérin.

Mais la tige de piston du premier vérin peut également être montée coulissante dans le cylindre du second vérin et jouer le rôle de piston pour ce second vérin.

On a décrit ci-après, à titre d'exemples non limitatifs, divers modes de réalisation de la suspension selon l'invention, avec référence au dessin annexé dans lequel:

la figure 1 est un schéma de la suspension;

la figure 2 montre en coupe un mode de réalisation pratique d'une suspension hydropneumatique;

la figure 3 montre en coupe un second mode de réalisation pratique d'une suspension hydropneumatique.

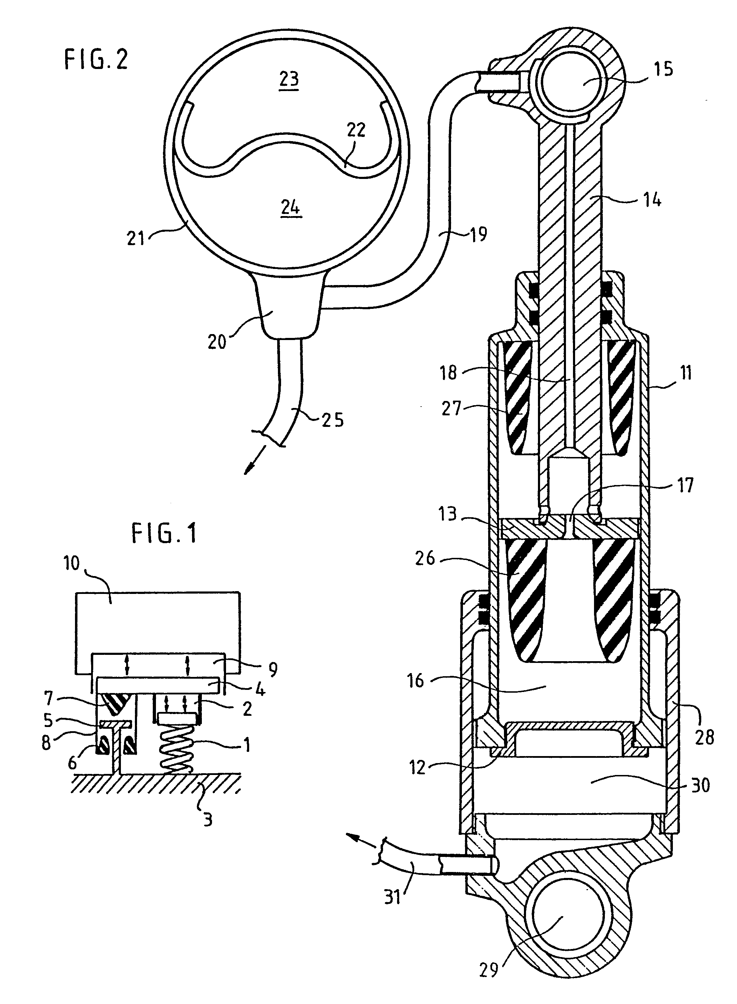

Telle qu'elle est représentée schématiquement à la figure 1, la suspension comprend un ressort 1 et une entretoise d'amortissement 2 d'épaisseur variable qui sont interposés en série entre l'essieu 3 et un support 4. L'essieu 3 est solidaire d'un élément de butée 5 mobile entre deux butées 6 et 7 en elastomère qui sont portées par un corps cylindrique 8 solidaire du support 4; ces butées limitent le débattement et le contre-débattement de l'essieu 3 par rapport à ce support 4. Par ailleurs, une deuxième entretoise 9 d'épaisseur variable est interposée entre le support 4 et le caisson 10 du véhicule.

L'entretoise 2 peut être constituée par un volume variable de liquide, tel que prévu par exemple dans une suspension oléopneumatique. Elle peut aussi être mécanique et constituée par exemple par un vérin à vis commandant la rotation de l'une ou l'autre extrémité d'une barre de torsion de manière que cette rotation modifie la distance entre le support 4 et l'essieu 3.

L'entretoise d'épaisseur variable 9 peut également être mécanique ou constituée par un volume variable de liquide. Elle est commandée par le conducteur de manière à faire varier la garde au sol du véhicule.

On voit au dessin que, lorsque la garde au sol varie à la demande du conducteur, par modification de l'épaisseur de l'entretoise 9, cette variation n'entraîne aucune modification de la distance entre l'essieu 3 et le support 4 de sorte que les butées 6 et 7 continuent à travailler dans des conditions optimales préalablement déterminées.

La figure 2 montre l'application de l'invention à une suspension hydropneumatique.

Cette suspension comprend un vérin 11 qui est obturé à son extrémité inférieure par un bouchon filété 12 et dans lequel est monté coulissant un piston 13. La tige 14 de ce piston est ancrée en 15 à la structure du véhicule.

La chambre de travail 16 du vérin 11 est reliée par l'intermédiaire d'un orifice 17 du piston 13, d'un perçage 18 de la tige 14, d'un conduit 19 et d'un amortisseur 20, à une enceinte oléopneumatique 21 qui est divisée par une membrane 22 en deux chambres 23 et 24. La chambre 23 contient un gaz sous pression et constitue un ressort pneumatique équivalent au ressort 1 du schéma de la figure 1; la chambre 24 contient un liquide et constitue l'entretoise d'épaisseur variable 2 de la figure 1. Etant donné leur liaison avec la chambre 16, ce ressort et cette entretoise d'épaisseur variable sont fonctionnellement interposés entre le cylindre du vérin 11 et le piston 13, donc entre ce cylindre et la structure du véhicule.

L'amortisseur 20 est relié par un conduit 25 à un correcteur de hauteur de type usuel qui permet de faire varier le volume de liquide dans la chambre 24 de manière à maintenir la position du piston 13 dans le cylindre du vérin 11 indépendante de la charge.

Le piston 13 porte une butée en élastomère 26 sur sa face opposée à la tige de piston 14 et une butée en élastomère de contre-débattement 27 est fixée à l'intérieur de l'extrémité supérieure du cylindre du vérin 11.

Le vérin 11 est monté coulissant dans le cylindre d'un deuxième vérin 28 qui est relié à son extrémité 29 au bras de roue ou à l'essieu du véhicule; l'enveloppe extérieure du vérin 11 forme piston pour le vérin 28.

La chambre de travail 30 du vérin 28, qui est équivalente à l'entretoise d'épaisseur variable 9 de la figure 1, est reliée par un conduit 31 à un dispositif correcteur, connu en soi, qui permet au conducteur de faire varier la garde au sol du véhicule.

On voit au dessin, que toute modification de la garde au sol est sans influence sur le réglage de la suspension de sorte qu'un confort optimal est conservé quelle que soit la hauteur du véhicule par rapport au sol.

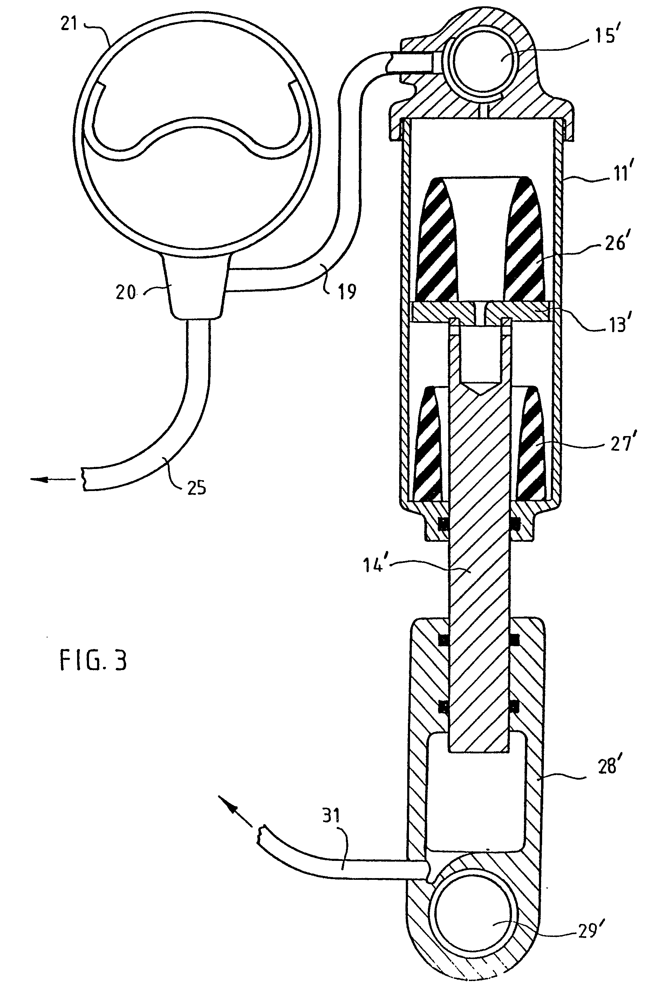

Dans le mode de réalisation de la figure 3, la position du cylindre du vérin de suspension 11 et celle de son piston sont inversées. Le vérin 11' est ancré en 15' à la structure du véhicule et la tige 14' de son piston 13' constitue le piston du vérin 28' qui est ancré en 29' au bras de roue ou à l'éssieu du véhicule. La butée de débattement 26' est prévue sur la face supérieure du piston 13' alors que la butée de contre-débattement 27' est disposée à la partie inférieure de vérin 11'.

Il va de soi que la présente invention ne doit pas être considérée comme limitée aux modes de réalisation décrits et représentés, mais en couvre au contraire, toutes les variantes. C'est ainsi que l'amortisseur 20 pourrait être placé à l'intérieur du vérin de suspension 11 ou 11' et coopérer avec le piston 14 ou 14'.

## Revendications

1. Suspension comprenant une entretoise (2) d'épaisseur variable disposée en série avec des moyens élastiques (1), entre ls structure de ce véhicule et l'essieu ou le bras de roue de ce véhicule, et des butées de débattement et de contre-débattement (6, 7, 26, 27, 26', 27') limitant la course de l'ensemble formé par l'entretoise (2) et les moyens élastiques (1), caractérisée ne ce qu'elle comporte une deuxième entretoise (9) d'épaisseur variable qui est disposée en série avec la première entretoise (2) et sur laquelle agissent les moyens pour faire varier la garde au sol, et en ce que les butées de débattement et de contre-débattement (6, 7, 26, 27, 26', 27') sont portées par ledit ensemble formé par la première entretoise (2) et les moyens élastiques (1).

2. Suspension selon la revendication 1, qui comprend un premier vérin (11 ou 11') associé à des moyens élastiques et des butées de débattement et de contre-débattement, caractérisée en ce qu'elle comprend en outre, un deuxième vérin (28 ou 28') qui est monté mobile par rapport au premier et des moyens hydrauliques pour déplacer les deux vérins l'un par rapport à l'autre, l'un des vérins étant lié à la structure du véhicule et l'autre à l'essieu ou au bras de roue de ce véhicule.

3. Suspension selon la revendication 2, caractérisée en ce que le cylindre du premier vérin (11) est monté coulissant dans le cylindre du second vérin (28) en jouant ainsi le rôle de piston pour ce second vérin.

4. Suspension selon la revendication 2, caractérisée en ce que la tige de piston (14') du premier vérin (11') est montée coulissante dans le cylindre du second vérin (28') et joue le rôle de piston pour ce second vérin.

## Patentansprüche

1. Aufhängung mit einem Zwischenstück variabler Höhe, das in Serie zu elastischen Mitteln (1) zwischen dem Aufbau eines Fahrzeugs und der Achse oder dem Radarm dieses Fahrzeugs angeordnet ist und mit Anschlägen und Gegenanschlägen (6, 7, 26, 27, 26', 27'), welche den Weg der durch das Zwischenstück (2) und die elastischen Mittel (1) gebildeten Baugruppe begrenzen, dadurch gekennzeichnet, dass sie ein zweites Zwischenstück (9) variabler Höhe aufweist, das in Serie zum ersten Zwischenstück (2) angeordnet ist und auf das Mittel zur Veränderung der Bodenfreiheit einwirken und dass die Anschläge und Gegenanschläge (6, 7, 26, 27, 26', 27') an der besagten, durch das erste Zwischenstück (2) und die elastischen Mittel (1) gebildeten Baugruppe angeordnet sind.

2. Aufhängung nach Anspruch 1, die eine erste Winde (11 oder 11') aufweist, welche mit elastischen Mitteln sowie Anschlägen und Gegenanschlägen verbunden ist, dadurch gekennzeichnet, dass sie ausserdem eine zweite Winde (28 oder 28') aufweist, die beweglich in Bezug auf die erste Winde angeordnet ist und hydraulische Mittel zur Verschiebung der beiden Winden gegeneinander, wobei eine der Winden mit dem Aufbau des Fahrzeugs und die andere mit der Achse oder dem Radarm dieses Fahrzeugs verbunden ist.

3. Aufhängung nach Anspruch 2, dadurch gekennzeichnet, dass der Zylinder der ersten Winde (11) gleitend im Zylinder der zweiten Winde (28) angeordnet ist und so die Rolle des Kolbens dieser zweiten Winde spielt.

4. Aufhängung nach Anspruch 2, dadurch gekennzeichnet, dass die Kolbenstange (14') der ersten Winde (11') gleitend im Zylinder der zweiten Winde (28') angeordnet ist und die Rolle des Kolbens dieser zweiten Winde spielt.

## Claims

1. Suspension comprising a spacer (2) of variable thickness disposed in series with resilient means (1) between the structure of this vehicle and the axle or wheel arm of this vehicle, and spring movement stops and counterstops (6, 7, 26, 27, 26', 27') limiting the stroke of the assembly formed by the spacer (2) and the resilient means (1) characterized in that it includes a second spacer (9) of variable thickness which is disposed in series with the first spacer (2) and on which act the means for varying the ground clearance, and in that the spring movement stops and counterstops (6, 7, 26, 27, 26', 27') are carried by said assembly formed by the first spacer (2) and the resilient means (1).

2. Suspension according to claim 1, which includes a first jack (11 or 11') associated with resilient means and spring movement stops and counterstops, characterized in that it further comprises a second jack (28 or 28') which is mounted for movement with respect to the first one and hydraulic means for moving the two jacks with respect to each other, one of the jacks being connected to the structure of the vehicle and the other to the axle or to the wheel arm of this vehicle.

3. Suspension according to claim 2, characterized in that the cylinder of the first jack (11) is mounted for sliding in the cylinder of the second jack (28) thus playing the role of piston for this second jack.

4. Suspension according to claim 2, characterized in that the piston rod (14') of the first jack (11') is mounted for sliding in the cylinder of the second jack (28') and plays the role of piston for this second jack.

FIG.2

23

22

24

21

20

19

25

15

14

18

27

11

17

13

26

16

28

12

30

29

31

FIG.1

10

9

4

7

2

5

1

8

6

3

0 148 060

FIG. 3

7